# EUROPÄISCHE PATENTSCHRIFT

(11) **EP 2 859 233 B1**
(45) Veröffentlichungstag und Bekanntmachung des Hinweises auf die Patenterteilung: **12.08.2020**
(21) Anmeldenummer: 13720401.2
(22) Anmeldetag: 03.05.2013
(51) Int. Cl.: F03G 7/06

(54) **AKTOR ZUR BETÄTIGUNG EINES STELLELEMENTES**
ACTUATOR FOR OPERATING A CONTROL ELEMENT
ACTIONNEUR POUR ACTIONNER UN ÉLÉMENT DE COMMANDE

(30) Priorität: 06.06.2012 DE 102012104901
(43) Veröffentlichungstag der Anmeldung: 15.04.2015
(73) Patentinhaber: Pierburg GmbH, 41460 Neuss (DE)
(72) Erfinder: PAFFRATH, Holger, 50259 Pulheim (DE)
(74) Vertreter: terpatent Patentanwälte ter Smitten Eberlein-Van Hoof Rütten Daubert
(86) Internationale Anmeldenummer: PCT/EP2013/059244
(87) Internationale Veröffentlichungsnummer: WO 2013/182359

(56) Entgegenhaltungen:
- WO-A2-2009/000859
- DE-A1-102010 025 142
- JP-A- S59 168 282
- JP-A- S59 206 682
- JP-A- S61 171 885
- US-A- 4 553 393
- US-A- 4 811 564
- US-A- 6 124 662

## Beschreibung

Die Erfindung betrifft einen Aktor zur Betätigung eines Stellelementes mit einem Stellelement, welches an einem Kraftübertragungsglied befestigt ist, einer Öffnungsfeder aus einer Formgedächtnislegierung, welche sich am Kraftübertragungsglied abstützt und auf das Kraftübertragungsglied in einer ersten Richtung wirkt, wobei die Federkraft von der Temperatur der Öffnungsfeder abhängt und einer Rückstellfeder, welche an dem Kraftübertragungsglied anliegt und auf das Kraftübertragungsglied in einer zur ersten Richtung entgegengesetzten Richtung wirkt.

Derartige Aktoren mit Federn aus einer Formgedächtnislegierung werden beispielsweise zur Durchführung von Steuer- und Regelungsvorgängen in Kraftfahrzeugen verwendet. Insbesondere können sie benutzt werden, um den Öffnungsquerschnitt eines Kanals über ein Ventilglied zu regeln, wie dies sonst beispielsweise mit Elektromagnetventilen durchgeführt wird. Der Vorteil dieser Ventile liegt darin, dass neben der aktiven Aktuierung durch Bestromung auch eine rein temperaturabhängige passive Aktuierung erfolgen kann, wie dies insbesondere zur automatischen Temperaturregelung in der Heiz- oder Lüftungstechnik erwünscht ist.

Ein derartiger Aktor ist beispielsweise aus der DE-OS 38 09 909 bekannt. Der hier offenbarte Aktor weist ein temperaturabhängig formveränderliches kraftübertragendes Element beispielsweise in Form einer Feder auf, welches mit einer Rückstellfeder zusammenwirkt, so dass je nach Temperatur ein Kraftübertragungselement, welches mit einem Stellelement gekoppelt ist, auf oder abbewegt wird.

Auch aus der DE 10 2008 063 534 A1 ist eine Anordnung zum Verstellen eines Ventils bekannt, bei dem eine Rückstellfeder auf ein Ventilschließglied wirkt, welches in entgegengesetzter Richtung durch eine Feder aus einer Formgedächtnislegierung belastet ist, welches entsprechend temperaturabhängig das Ventilschließglied zwischen einer Ruheposition und einer Arbeitsposition schaltet.

Zusätzlich ist aus der DE 10 2010 025 142 A1 ein adaptives Feder-Dämpfungssystem bekannt, bei dem auf ein Betätigungselement eine Kraft eines Formgedächtniselementes und die Kraft einer Rückstellfeder in entgegengesetzter Richtung wirkt. Die Rückstellfeder wird komprimiert, indem ein weiteres Formgedächtniselement die Rückstellfeder in Richtung eines Ansatzes des Betätigungselementes verschiebt.

Diese bekannten Aktoren eignen sich jedoch nicht für Anwendungen, bei denen ein Öffnen bei erhöhter Außentemperatur ausgeschlossen werden soll. Entsprechend erfolgt ein ungewolltes passives Schalten bei Erhöhung der Umgebungstemperatur.

Es stellt sich daher die Aufgabe einen Aktor zur Betätigung eines Stellelementes bereit zu stellen, der mit aus temperaturabhängig schaltenden Formgedächtnislegierungen hergestellten Federelementen arbeitet und dennoch ein ungewolltes Schalten bei hohen Umgebungstemperaturen zuverlässig verhindert.

Diese Aufgabe wird durch einen Aktor zur Betätigung eines Stellelementes mit den Merkmalen des Hauptanspruchs gelöst.

Dadurch, dass eine Schließfeder aus einer Formgedächtnislegierung, die sich gegen das Kraftübertragungsglied abstützt und auf das Kraftübertragungsglied in einer zur ersten Richtung entgegengesetzten Richtung wirkt, wobei die Gefügeumwandlungstemperatur der Schließfeder niedriger als die der Öffnungsfeder, wird durch die Rückstellkraft der Rückstellfeder bei Erwärmung der beiden Federn aus der Formgedächtnislegierung eine resultierende Kraft in Schließrichtung erzeugt, so dass ein ungewolltes Öffnen vermieden wird. Durch die unterschiedlichen Gefügeumwandlungstemperaturen der Schließfeder und der Öffnungsfeder wird dabei sichergestellt, dass bei passiver Betätigung durch Erhöhung der Umgebungstemperatur zunächst die Schließfeder schaltet, was ein ungewolltes Öffnen über den gesamten Umgebungstemperaturbereich verhindert.

In einer bevorzugten Ausführungsform ist in einem Gehäuse des Aktors ein erster Anschlag ausgebildet, gegen den das Kraftübertragungsglied durch die Federkraft der Öffnungsfeder verschiebbar ist, wodurch eine Überlastung der Schließfeder und eine zu weite Verschiebung des Stellelementes, insbesondere eine zu weite Öffnung eines Durchströmungsquerschnittes bei Verwendung des Aktors als Aktor für ein Ventil, verhindert werden.

In einer besonders vorteilhaften Ausbildung der Erfindung liegt die Öffnungsfeder mit ihrem zum Kraftübertragungsglied entgegengesetzten Ende gegen ein bewegliches Abstützelement an, welches in entgegengesetzter Richtung durch eine Kraftbegrenzungsfeder belastet ist. Die Kraftbegrenzungsfeder dient als Widerlager der Öffnungsfeder, so dass bei Aktivierung sowohl der Öffnungsfeder als auch der Schließfeder eine Überlastung der Öffnungsfeder verhindert wird, da diese nicht gegen einen festen Anschlag anliegt.

Um gleichzeitig eine Öffnungskraft bei nicht geschalteter Öffnungsfeder und Schließfeder zu verhindern, ist im Gehäuse des Aktors ein zweiter Anschlag ausgebildet, gegen den das bewegliche Abstützelement durch die Kraftbegrenzungsfeder verschiebbar ist und welcher die Ausdehnung der Kraftbegrenzungsfeder beschränkt.

Vorzugsweise sind die Schließfeder und/oder die Öffnungsfeder durch Bestromung aktiv aktuierbar. So kann auf einfache Weise und in kürzester Zeit eine zum Schalten notwendige Temperaturerhöhung in der entsprechenden Feder erzeugt werden.

Des Weiteren ist, um einen zuverlässigen Verschluss auch bei erhöhter Umgebungstemperatur sicherzustellen, die resultierende Federkraft der Rückstellfeder und der aktuierten Schließfeder größer als die der aktuierten Öffnungsfeder.

Auch ist es vorteilhaft, wenn die Federkraft der Kraftbegrenzungsfeder bei Anlage des beweglichen Abstützelementes am zweiten Anschlag kleiner ist als die in entgegengesetzter Richtung auf das bewegliche Abstützelement wirkende Kraft bei aktuierter Öffnungsfeder und aktuierter Schließfeder. So wird eine Kompression der Kraftbegrenzungsfeder bei erhöhter Umgebungstemperatur oder bei Bestromung der Schließfeder und vor der ausreichenden Abkühlung der Öffnungsfeder, ermöglicht, was die auf die Öffnungsfeder wirkende Kraft begrenzt.

In einer besonderen Ausführungsform dient ein Aktordeckel als Öffnungsfeder, so dass der Aktordeckel als Plattenfeder wirkt.

Bei einer Anwendung des Aktors zur Betätigung von Ventilen oder Klappen ist das Stellelement eine Ventilstange oder eine Klappenwelle. Weitere zwischengeschaltete Bauteile sind nicht notwendig.

Es wird somit ein Aktor zur Betätigung eines Stellelementes geschaffen, mit welchem auf einfache Weise ein ungewolltes also passives Öffnen aufgrund steigender Umgebungstemperatur zuverlässig verhindert wird und gleichzeitig eine Überlastung der verwendeten Federelemente zuverlässig verhindert wird.

Ein Ausführungsbeispiel eines erfindungsgemäßen Aktors zur Betätigung eines Stellelementes in Form einer Ventilstange ist in den Figuren dargestellt und wird nachfolgend beschrieben.
Die Figur 1 zeigt in schematischer Darstellung eine Seitenansicht eines erfindungsgemäßen Aktors zur Betätigung eines Ventils im geschlossenen passiven Zustand.
Die Figur 2 zeigt in schematischer Darstellung den erfindungsgemäßen Aktor aus Figur 1 im aktiv geöffneten Zustand.
Die Figur 3 zeigt in schematischer Darstellung den erfindungsgemäßen Aktor aus Figur 1 im aktiv geschlossenen Zustand bei noch nicht abgekühlter Öffnungsfeder.
Die Figur 4 zeigt in schematischer Darstellung den erfindungsgemäßen Aktor aus Figur 1 im aktiv geschlossenen Zustand bei abgekühlter Öffnungsfeder.
Die Figur 5 zeigt in schematischer Darstellung den erfindungsgemäßen Aktor aus Figur 1 bei einer Umgebungstemperatur oberhalb der Gefügeumwandlungstemperatur der Schließfeder und unterhalb der Gefügeumwandlungstemperatur der Öffnungsfeder.
Die Figur 6 zeigt in schematischer Darstellung den erfindungsgemäßen Aktor aus Figur 1 bei einer Umgebungstemperatur oberhalb der Gefügeumwandlungstemperatur der Schließfeder und der Öffnungsfeder.

Der erfindungsgemäße, in den Figuren dargestellte Aktor 10 besteht aus einem Gehäuse 12, aus dem ein Stellelement in Form einer Ventilstange 14 ragt, welche linear beweglich gelagert ist. Am zum Aktor 10 entgegengesetzten Ende ist an der Ventilstange 14 ein Ventilschließglied 16 befestigt, welches zur Regelung eines Durchströmungsquerschnitts auf einen Ventilsitz 18 absenkbar oder von diesem abhebbar ist.

Am zum Ventilschließglied 16 entgegengesetzten Ende der Ventilstange 14 ist eine als Kraftübertragungsglied wirkende Platte 20 befestigt, gegen die eine Rückstellfeder 22 von der zum Ventilschließglied 16 weisenden Seite anliegt. Das entgegengesetzte Ende der Rückstellfeder 22 stützt sich am Gehäuse 12 des Aktors ab. Zusätzlich befindet sich die Rückstellfeder 22 und den in das Gehäuse ragende Teil der Ventilstange 14 radial umgebend eine Schließfeder 24 aus einer Formgedächtnislegierung im Gehäuse 12, die sich ebenfalls an ihrem ersten Ende gegen die Platte 20 und an ihrem zweiten Ende gegen das Gehäuse 12 abstützt.

An der anderen Seite der Platte 20 stützt sich eine Öffnungsfeder 26 aus einer Formgedächtnislegierung ab, welche wiederum mit ihrem entgegengesetzten Ende gegen ein bewegliches Abstützelement in Form einer zweiten Platte 28 anliegt.

An der anderen Seite der zweiten Platte 28 liegt wiederum eine Kraftbegrenzungsfeder 30 an, deren entgegengesetztes Ende sich gegen das feststehende Gehäuse 12 abstützt.

Am Gehäuse 12 ist ein erster Anschlag 32 und ein zweiter Anschlag 34 ausgebildet, gegen die die Platten 20, 28 jeweils anliegen, wenn sie in Richtung des Ventilschließgliedes 16 belastet sind. So wird durch den ersten Anschlag 32 ein maximaler Verstellweg des Stellelementes 14 begrenzt und durch den zweiten Anschlag 34 eine maximale Ausdehnung der Kraftbegrenzungsfeder 30 festgelegt.

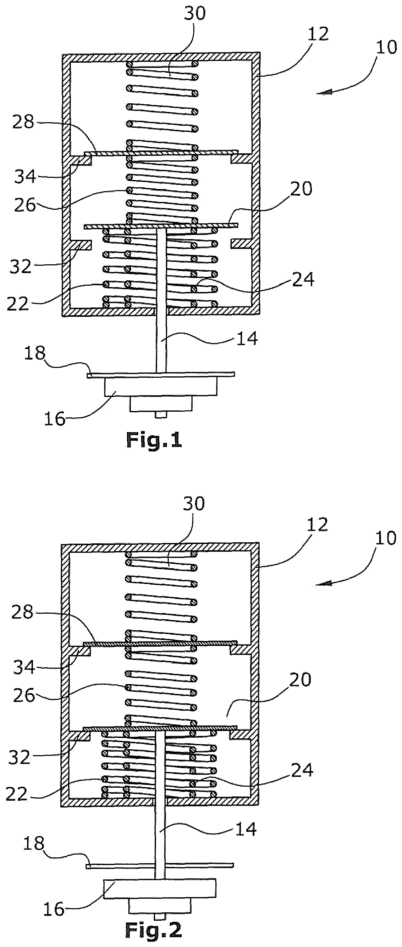

In der Figur 1 ist der Ausgangszustand des Aktors 10 dargestellt, also der Zustand, in dem die Umgebungstemperatur unterhalb der Gefügeumwandlungstemperaturen der Öffnungsfeder 26 und der Schließfeder 24 liegt und beide Betätigungsfedern 24, 26 nicht bestromt sind. In diesem Zustand ist die auf die Platte 20 wirkende resultierende Kraft der Rückstellfeder 22 und der Schließfeder 24 größer als die der Öffnungsfeder 26, so dass die Platte 20 vom ersten Anschlag 32 wegbewegt wird und somit das Ventilschließglied 16 gegen den Ventilsitz 18 gedrückt wird. Die Kraft der Kraftbegrenzungsfeder ist größer als die von der entgegengesetzten Seite auf die zweite Platte 28 wirkende Kraft der Öffnungsfeder 26, so dass die zweite Platte 28 gegen den zweiten Anschlag 34 gedrückt wird.

Zur aktiven Betätigung des Aktors 10 wird im Folgenden die Öffnungsfeder 26 bestromt, so dass deren Temperatur auf oberhalb der Gefügeumwandlungstemperatur steigt. Dies hat zur Folge, dass die Öffnungsfeder 26 sich ausdehnt und entsprechend beide Platten 20, 28 belastet. Die Kraftbegrenzungsfeder 30 und die Rückstellfeder 22 sind so ausgelegt, dass hierdurch die Rückstellfeder 22 und die Schließfeder 24 komprimiert werden, also deren resultierende Kraft unterhalb der Federkraft der Öffnungsfeder 26 liegt, während die Kraft der Kraftbegrenzungsfeder 30 die Wirkkraft der Öffnungsfeder 26 überschreitet und somit weiter die Platte 28 gegen den zweiten Anschlag 34 gedrückt wird. Durch die Bewegung der Platte 20 aufgrund der Ausdehnung der Öffnungsfeder 26 und der Kompression der Rückstellfeder 22 und der Schließfeder 24 wird das Stellelement 14 bewegt und das Ventilschließglied 16 vom Ventilsitz 18 abgehoben, bis die Platte 20 gegen den ersten Anschlag 32 anliegt. Dieser Zustand ist in Figur 2 dargestellt.

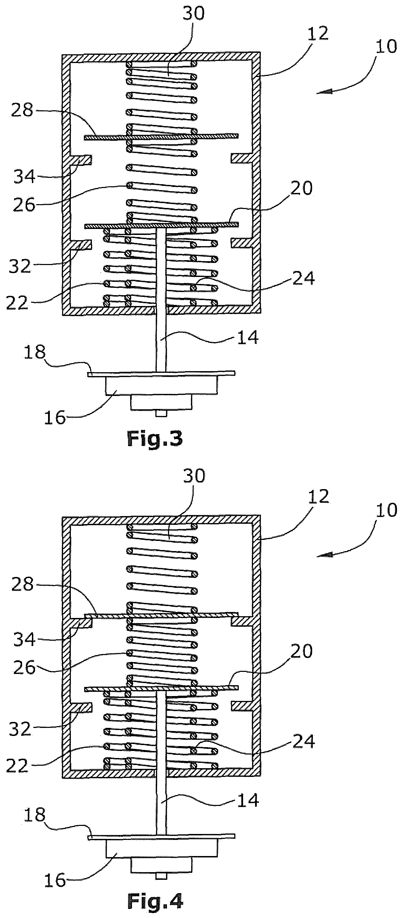

Soll nun das Ventilschließglied 16 wieder auf den Ventilsitz 18 abgesenkt werden, wird die Bestromung der Öffnungsfeder 26 gestoppt und stattdessen eine Bestromung der Schließfeder 24 durchgeführt, welche üblicherweise schneller aufheizt als die Öffnungsfeder 26 abkühlt. Dies hat den in Figur 3 dargestellten Zustand zur Folge, in dem sowohl die Öffnungsfeder 26 als auch die Schließfeder 24 gedehnt ausgebildet sind. Da erneut die resultierende Kraft der gedehnten Schließfeder 24 und der Rückstellfeder 22 größer ist als die der gedehnten Öffnungsfeder 26 wird die Platte 20 vom Anschlag abgehoben und somit das Ventilschließglied 16 auf den Ventilsitz 18 abgesenkt. Gleichzeitig ist jedoch auch die über die Öffnungsfeder 26 auf die zweite Platte 28 wirkende Kraft größer als die Kraft der Kraftbegrenzungsfeder 30, so dass auch die zweite Platte 28 vom zweiten Anschlag 34 abgehoben wird, wodurch die Öffnungsfeder 26 in ihrem gedehnten Zustand auch bei geschlossenem Ventil verweilen kann.

Nachdem die Öffnungsfeder 26 abgekühlt ist, befindet sie sich wieder in ihrem komprimierten Zustand, wodurch die zweite Platte 28 durch die nun größere Kraft der Kraftbegrenzungsfeder 30 wieder gegen den zweiten Anschlag gedrückt wird, während die erste Platte 20 und somit das Ventilschließglied in seiner Position verharrt, wie dies in Figur 4 dargestellt ist. Dieser gleiche Zustand entsteht auch nach dem Ende der Bestromung der Öffnungsfeder 26 mit Verzögerung, wenn die Schließfeder 24 nicht aktiviert wird, da in diesem Fall erneut nach der Abkühlung der Öffnungsfeder 26 diese komprimiert wird, so dass die resultierende Kraft der Schließfeder 24 mit der Rückstellfeder 22 größer ist als die der Öffnungsfeder 26.

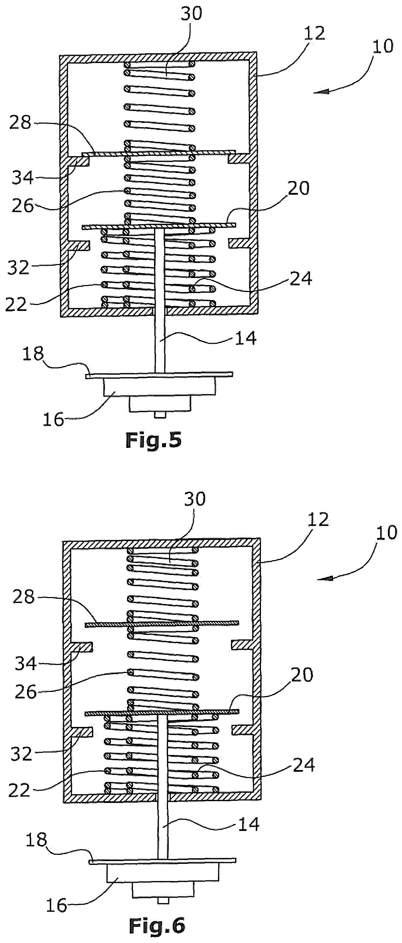

Erfindungsgemäß wird auch bei steigender Umgebungstemperatur auf eine Temperatur oberhalb der Gefügeumwandlungstemperatur ein ungewolltes Öffnen des Ventils verhindert. Hierzu ist es notwendig, dass die Gefügeumwandlungstemperatur der Schließfeder 24 niedriger ist als die der Öffnungsfeder 26. Wirkt nun eine Temperatur auf den Aktor 10, welche zwischen den beiden Gefügeumwandlungstemperaturen liegt, dehnt sich die Schließfeder 24, wodurch das Ventilschließglied 16 auf den Ventilsitz 18 gedrückt wird, wie dies in Figur 5 dargestellt ist.

Bei weiter steigenden Umgebungstemperaturen dehnt sich auch die Öffnungsfeder 26, was jedoch kein Öffnen des Ventils zur Folge hat, da wie bereits zu Figur 3 beschrieben in diesem Zustand eine Verschiebung der Platte 28 vom Anschlag 34 weg erfolgt. Die dabei auf die Platte 28 von der Öffnungsfeder übertragene Kraft ist größer als die der Kraftbegrenzungsfeder und die auf die Platte 20 wirkende resultierende Kraft der Rückstellfeder und der Schließfeder ist größer als die von der Öffnungsfeder auf die Platte 20 übertragene Kraft, so dass sich die in Figur 6 dargestellte Stellung mit geschlossenem Ventil ergibt.

Ein derartiger Aktor lässt sich entsprechend bei niedrigen Temperaturen, also beispielsweise in einem Bereich zwischen -40°C und 80°C, je nach gewählten Gefügeumwandlungstemperaturen aktiv schalten. Auch ein passives Schließen ist in diesem Temperaturbereich möglich. Hingegen wird ein Öffnen bei Temperaturen oberhalb der gewählten Gefügeumwandlungstemperaturen zuverlässig vermieden. Selbstverständlich ist eine Überlastung insbesondere der Schließfeder durch eine geeignete Auslegung der Federkraft und Federlänge zu verhindern.

Es sollte deutlich sein, dass ein derartiger Aktor nicht der dargestellten Ausführung entsprechen muss. So lassen sich beispielsweise die Federn auch als Spiralfedern in einem rotatorisch statt translatorisch wirkenden Aktor ausführen. Ebenfalls denkbar ist es, beispielsweise die als Schraubenfedern dargestellten Federelemente als Blattfedern oder plattenförmige Federn auszubilden, so dass ein Ventildeckel in Plattenform als Öffnungsfeder dienen könnte. Verschiedene weitere konstruktive Varianten sind ebenfalls denkbar, ohne den Schutzbereich des Hauptanspruchs zu verlassen.

## Patentansprüche

1. Aktor zur Betätigung eines Stellelementes mit
einem Stellelement (14), welches an einem Kraftübertragungsglied (20) befestigt ist,
einer Öffnungsfeder (26) aus einer Formgedächtnislegierung, welche sich am Kraftübertragungsglied (20) abstützt und auf das Kraftübertragungsglied (20) in einer ersten Richtung wirkt, wobei die Federkraft von der Temperatur der Öffnungsfeder (26) abhängt und
einer Rückstellfeder (22), welche an dem Kraftübertragungsglied (20) anliegt und auf das Kraftübertragungsglied (20) in einer zur ersten Richtung entgegengesetzten Richtung wirkt,
**dadurch gekennzeichnet, dass**
eine Schließfeder (24) aus einer Formgedächtnislegierung, die sich gegen das Kraftübertragungsglied (20) abstützt und auf das Kraftübertragungsglied (20) in einer zur ersten Richtung entgegengesetzten Richtung wirkt, wobei die Gefügeumwandlungstemperatur der Schließfeder (24) niedriger ist als die der Öffnungsfeder (26).

2. Aktor zur Betätigung eines Stellelementes nach Anspruch 1,
**dadurch gekennzeichnet, dass**
in einem Gehäuse (12) des Aktors (10) ein erster Anschlag (32) ausgebildet ist, gegen den das Kraftübertragungsglied (20) durch die Federkraft der Öffnungsfeder (26) verschiebbar ist.

3. Aktor zur Betätigung eines Stellelementes nach einem der vorhergehenden Ansprüche,
**dadurch gekennzeichnet, dass**
die Öffnungsfeder (26) mit ihrem zum Kraftübertragungsglied (20) entgegengesetzten Ende gegen ein bewegliches Abstützelement (28) anliegt, welches in entgegengesetzter Richtung durch eine Kraftbegrenzungsfeder (30) belastet ist.

4. Aktor zur Betätigung eines Stellelementes nach Anspruch 2 und 3,
**dadurch gekennzeichnet, dass**
im Gehäuse (12) des Aktors (10) ein zweiter Anschlag (34) ausgebildet ist, gegen den das bewegliche Abstützelement (28) durch die Kraftbegrenzungsfeder (30) verschiebbar ist und welcher die Ausdehnung der Kraftbegrenzungsfeder (30) beschränkt.

5. Aktor zur Betätigung eines Stellelementes nach einem der vorhergehenden Ansprüche,
**dadurch gekennzeichnet, dass**
die Schließfeder (24) und/oder die Öffnungsfeder (26) durch Bestromung aktiv aktuierbar sind.

6. Aktor zur Betätigung eines Stellelementes nach einem der vorhergehenden Ansprüche,
**dadurch gekennzeichnet, dass**
die resultierende Federkraft der Rückstellfeder (22) und der aktuierten Schließfeder (24) größer ist als die der aktuierten Öffnungsfeder (26).

7. Aktor zur Betätigung eines Stellelementes nach einem der Ansprüche 3 bis 6,
**dadurch gekennzeichnet, dass**
die Federkraft der Kraftbegrenzungsfeder (30) bei Anlage des beweglichen Abstützelementes (28) am zweiten Anschlag (34) kleiner ist als die in entgegengesetzter Richtung auf das bewegliche Abstützelement (28) wirkende Kraft bei aktuierter Öffnungsfeder (26) und aktuierter Schließfeder (24).

8. Aktor zur Betätigung eines Stellelementes nach einem der vorhergehenden Ansprüche,
**dadurch gekennzeichnet, dass**
ein Aktordeckel als Öffnungsfeder (26) dient.

9. Aktor zur Betätigung eines Stellelementes nach einem der vorhergehenden Ansprüche,
**dadurch gekennzeichnet, dass**
das Stellelement eine Ventilstange (14) oder eine Klappenwelle ist.

## Claims

1. Actuator for operating an actuating element comprising
an actuating element (14) fastened to a force transmission member (20),
an opening spring (26) made of a shape memory alloy, the spring being supported on the force transmission member (20) and acting on the force transmission element (20) in a first direction, the spring force depending on the temperature of the opening spring (26), and
a return spring (22) abutting on the force transmission member (20) and acting on the force transmission member (20) in a direction opposite to the first direction,
**characterized in that**
a closing spring (24) made of a shape memory alloy is supported on the force transmission member (20) and acts on the force transmission member (20) in a direction opposite to the first direction, wherein the structural transformation temperature of the closing spring (24) is lower than that of the opening spring (26).

2. Actuator for operating an actuating element of claim 1, **characterized in that** a first stop (32) is formed in a housing (12) of the actuator (10), against which stop the force transmission member (20) can be displaced by the spring force of the opening spring (26).

3. Actuator for operating an actuating element of one of the preceding claims, **characterized in that**, with its end opposite the force transmission member (20), the opening spring (26) abuts against a movable support element (28) loaded in the opposite direction by a force limiting spring (30).

4. Actuator for operating an actuating element of claims 2 and 3, **characterized in that** a second stop (34) is formed in the housing (12) of the actuator (10), against which stop the movable support element (28) can be displaced by the force limiting spring (30) and which restricts the expansion of the force limiting spring (30).

5. Actuator for operating an actuating element of one of the preceding claims, **characterized in that** the closing spring (24) and/or the opening spring (26) can be actively actuated by being supplied with power.

6. Actuator for operating an actuating element of one of the preceding claims, **characterized in that** the resulting spring force of the return spring (22) and the actuated closing spring (24) is greater than that of the actuated opening spring (26).

7. Actuator for operating an actuating element of one of claims 3 to 6, **characterized in that** when the movable support element (28) is in contact with the second stop (34), the spring force of the force limiting spring (30) is smaller than the force acting in the opposite direction on the movable support element (28) when the opening spring (26) and the closing spring (24) are actuated.

8. Actuator for operating an actuating element of one of the preceding claims, **characterized in that** an actuator cover serves as an opening spring (26).

9. Actuator for operating an actuating element of one of the preceding claims, **characterized in that** the actuating element is a valve rod (14) or a flap shaft.

## Revendications

1. Actionneur pour actionner un élément d'actionnement comprenant
un élément d'actionnement (14) fixé à un élément de transmission de force (20),
un ressort d'ouverture (26) en alliage à mémoire de forme s'appuyant sur ledit élément transmission de force (20) et agissant sur l'élément de transmission de force (20) dans une première direction, la force du ressort étant fonction de la température du ressort d'ouverture (26), et
un ressort de rappel (22) s'appuyant sur ledit élément transmission de force (20) et agissant sur l'élément de transmission de force (20) dans une direction opposée à la première direction,
**caractérisé en ce qu'**un ressort de fermeture (24) en alliage à mémoire de forme s'appuie sur l'élément de transmission de force (20) et agit sur l'élément de transmission de force (20) dans une direction opposée à la première direction, la température de transformation structurelle du ressort de fermeture (24) étant inférieure à celle du ressort d'ouverture (26).

2. Actionneur pour actionner un élément d'actionnement selon la revendication 1, **caractérisé en ce qu'**une première butée (32) est formée dans un carter (12) de l'actionneur (10) contre laquelle l'élément de transmission de force (20) peut être déplacé par la force du ressort du ressort d'ouverture (26).

3. Actionneur pour actionner un élément d'actionnement selon l'une quelconque des revendications précédentes, **caractérisé en ce que**, par son extrémité opposée à l'élément de transmission de force (20), le ressort d'ouverture (26) s'appuie sur un élément de support (28) mobile sollicité dans la direction opposée par un ressort de limitation de force (30).

4. Actionneur pour actionner un élément d'actionnement selon les revendications 2 et 3, **caractérisé en ce qu'**une deuxième butée (34) est formée dans le carter (12) de l'actionneur (10), contre laquelle l'élément de support (28) mobile peut être déplacé par le ressort de limitation de force (30) et qui limite l'expansion du ressort de limitation de force (30).

5. Actionneur pour actionner un élément d'actionnement selon l'une quelconque des revendications précédentes, **caractérisé en ce que** le ressort de fermeture (24) et/ou le ressort d'ouverture (26) peuvent être actionnés activement par alimentation en courant.

6. Actionneur pour actionner un élément d'actionnement selon l'une quelconque des revendications précédentes, **caractérisé en ce que** la force de ressort résultante du ressort de rappel (22) et du ressort de fermeture (24) actionné est supérieure à celle du ressort d'ouverture (26) actionné.

7. Actionneur pour actionner un élément d'actionnement selon l'une des revendications 3 à 6, **caractérisé en ce que**, lorsque l'élément de support (28) mobile s'appuie sur la deuxième butée (34), la force de ressort du ressort de limitation de force (30) est inférieure à celle agissant dans la direction opposée sur l'élément de support (28) mobile lorsque le ressort d'ouverture (26) est actionné et le ressort de fermeture (24) est actionné.

8. Actionneur pour actionner un élément d'actionnement selon l'une quelconque des revendications précédentes, **caractérisé en ce qu'**un couvercle d'actionneur sert de ressort d'ouverture (26).

9. Actionneur pour actionner un élément d'actionnement selon l'une quelconque des revendications précédentes, **caractérisé en ce que** l'élément d'actionnement est une tige de soupape (14) ou un arbre de clapet.
